# EUROPÄISCHE PATENTANMELDUNG

(11) **EP 4 496 301 A1**
(43) Veröffentlichungstag der Anmeldung: **22.01.2025**
(21) Anmeldenummer: 24186999.9
(22) Anmeldetag: 08.07.2024
(51) Int. Cl.: H04N 1/60

(54) **FARBMANAGEMENT FÜR MASCHINELL AUSLESBARE OPTISCHE CODES AUF DRUCKERZEUGNISSEN**

(30) Priorität: 17.07.2023 DE 102023118821
(71) Anmelder: Heidelberger Druckmaschinen AG, 69115 Heidelberg (DE)
(72) Erfinder: Schenk, Stefan, 69257 Wiesenbach (DE); Dr. Thomsen, Hauke, 24226 Heikendorf (DE)

(57) **Zusammenfassung**

Es wird ein Verfahren zum Drucken eines Druckbildes beschrieben, das wenigstens einen maschinell auslesbaren optischen Code umfasst. Die digitalen Daten des Codes innerhalb des Druckbildes werden während der Farbraumtransformation nach einem anderen Verfahren transformiert als der Rest des Druckbildes, wobei man die Anzahl der Druckfarben des Codes während der Transformation reduziert.

## Beschreibung

Die vorliegende Erfindung betrifft ein Verfahren zum Drucken eines Druckbildes, das wenigstens einen maschinell auslesbaren optischen Code umfasst.

In der Druckindustrie sind verschiedene Druckverfahren wie Offsetdruck, Flexodruck, Siebdruck, Inkjetdruck und viele andere mehr bekannt. Die Daten eines Druckjobs für solche Druckverfahren liegen üblicherweise in digitaler Form vor und umfassen unter anderem Informationen zur gewünschten Farbwiedergabe des Druckbildes. Die Farbwiedergabedaten des Druckbildes können jedoch in der Regel nicht ohne Umrechnung von der Druckmaschine umgesetzt werden, weil die Druckmaschine einen anderen Farbraum, etwa Cyan, Magenta, Yellow, Black (CMYK), im Vergleich zu den digitalen Daten des Druckbildes aufweist. Die Umrechnung der Farbinformationen, welche man auch als Farbtransformation bezeichnet, wird im Stand der Technik häufig über ICC-Profile in der Druckvorstufe durchgeführt.

Vor allem beim Drucken von Warenverpackungen mit Barcodes oder QR-Codes tritt das Problem auf, dass nach der erfolgten Farbtransformation die Qualität der Barcodes und QR-Codes leidet. Diese können dann später etwa über Kassensysteme nicht mehr so gut ausgelesen werden. Im Etikettendruck und im Verpackungsdruck werden häufig Sonderfarben eingesetzt, die einem Color Management unterworfen werden. Dies führt oftmals zu einer Farbmischung, die im Druck besonders anfällig gegenüber Passerschwankungen ist. Wenn die Farbmischung aus relativ offenen Rastertönen besteht, kommt es zusätzlich noch zu einer Kantenunschärfe, die sich aus den Druckpunkten ergibt. Dies mindert die Lesbarkeit der Barcodes und QR-Codes zusätzlich. Der einfache Austausch der Farbe für den Barcode oder QR-Code gegen eine kontraststarke Farbe wie Schwarz ist nicht immer möglich oder erwünscht.

Die DE 10 2018 201 669 A1 offenbart ein Verfahren zum Erhalt des Schwarzaufbaus von Objekten. Dabei wird ein Verfahren umfassend eine Farbraumtransformation beschrieben, mit dem schwarze Bildobjekte wie Barcodes auf Sonderfarben gedruckt werden können, ohne die Druckqualität negativ zu beeinträchtigen. Eine separate Farbtransformation von Bilddaten der Barcodes unter Reduktion der Anzahl ihrer Druckfarben wird nicht beschrieben.

Es ist Aufgabe der vorliegenden Erfindung, ein Verfahren anzugeben, mit dem Druckbilder mit maschinell auslesbaren optischen Codes auf Druckmaschinen gedruckt werden können, wobei sich die Codes hinterher besser optisch auslesen lassen.

Es wurde nun gefunden, dass man einen besonders gut maschinell auslesbaren optischen Code auf dem Bedruckstoff erhält, indem man die digitalen Druckdaten des Codes nach einem anderen Verfahren farbtransformiert als die digitalen Druckdaten des übrigen Druckbildes, wobei man während der Farbtransformation die Anzahl der Druckfarben des Codes reduziert.

Das erfindungsgemäße Verfahren ist mit mehreren Vorteilen verbunden. Man kann eine Erhöhung der Konturgenauigkeit und damit der Lesbarkeit des Codes durch bewusste Selektion einer Farbe mit hohem Flächendeckungsanteil erzielen. Es kann eine hohe Randschärfe der Codes erzielt werden. Gleichzeitig kann man die Passeranfälligkeit durch den verringerten Einsatz von Primärfarben reduzieren. Die durch das erfindungsgemäße Verfahren erhaltenen Codes können mit verbesserter Fehlerquote maschinell optisch erkannt und ausgelesen werden.

Dementsprechend betrifft die vorliegende Erfindung ein Verfahren zum Drucken eines Druckbildes, das wenigstens einen maschinell auslesbaren optischen Code umfasst, mit einer Druckmaschine, bei dem man digitale Druckdaten des Druckbildes bereitstellt, wobei die digitalen Druckdaten des Druckbildes die digitalen Druckdaten des wenigstens einen maschinell auslesbaren optischen Codes und die digitalen Druckdaten des restlichen Druckbildes umfassen, die digitalen Druckdaten des Druckbildes einer Farbtransformation unterzieht, welche die Transformation der Farben des Druckbildes in die Druckfarben der Druckmaschine umfasst, wobei man die der Farbtransformation unterzogenen digitalen Druckdaten des Druckbildes an die Druckmaschine übermittelt und mit diesen das Druckbild mit der Druckmaschine druckt, wobei man bei der Farbtransformation der digitalen Druckdaten des Druckbildes die digitalen Druckdaten des wenigstens einen maschinell auslesbaren optischen Codes nach einem anderen Verfahren transformiert als die digitalen Druckdaten des restlichen Druckbildes und in den digitalen Druckdaten des wenigstens einen maschinell auslesbaren optischen Codes die Anzahl der Druckfarben des wenigstens einen maschinell auslesbaren optischen Codes reduziert.

Als maschinell auslesbarer optischer Code wird in gedruckter Form ein Druckbild auf einem Bedruckstoff verstanden, wobei in dem Druckbild Informationen codiert sind, welche mittels einer maschinellen optischen Vorrichtung, bevorzugt einem elektronischen Scanner wie einem Kassenscanner, einem elektronischen Handscanner oder einem Smartphone, optisch erfasst und mittels eines Computers ausgelesen werden können. In einer bevorzugten Ausführungsform ist der wenigstens eine maschinell auslesbare optische Code ausgewählt unter Barcodes und QR-Codes.

Erfindungsgemäß werden unter den digitalen Daten des restlichen Druckbildes diejenigen Bilddaten verstanden, welche zwar einer Farbtransformation unterworfen werden, jedoch keine Bilddaten eines maschinell auslesbaren optischen Codes umfassen. Somit handelt es sich um die bildliche Darstellung dessen, was mit der Druckmaschine auf den Bedruckstoff gedruckt werden soll, abzüglich der bildlichen Darstellung eines oder mehrerer maschinell auslesbarer optischer Codes, die im ursprünglichen Druckbild vorliegen.

In dem erfindungsgemäßen Verfahren transformiert man bei der Farbtransformation der digitalen Druckdaten des Druckbildes die digitalen Druckdaten des wenigstens einen maschinell auslesbaren optischen Codes nach einem anderen Verfahren als die digitalen Druckdaten des restlichen Druckbildes. Dementsprechend werden die digitalen Druckdaten des wenigstens einen maschinell auslesbaren optischen Codes einer anderen Farbtransformation unterzogen als die digitalen Druckdaten des restlichen Druckbildes. Insbesondere werden die digitalen Druckdaten des restlichen Druckbildes keiner Farbtransformation unterzogen, in der man die Anzahl der Druckfarben des restlichen Druckbildes reduziert.

Als Druckmaschinen für das erfindungsgemäße Verfahren sind prinzipiell alle Arten von Druckmaschinen geeignet. Die Druckmaschinen sind bevorzugt ausgewählt unter Offsetdruckmaschinen, Flexodruckmaschinen, Siebdruckmaschinen und Inkjetdruckmaschinen. Diese können unterschiedlich eingerichtet sein und insofern unterschiedliche Zielfarbräume aufweisen. Als Druckmaschinen für das erfindungsgemäße Verfahren sind solche bevorzugt, welche die Farben CMYK und gegebenenfalls wenigstens eine Sonderfarbe umfassen. Als Sonderfarben werden solche Farben verstanden, die sich nicht durch beliebige Mischung der Farben CMYK erhalten lassen. Bei der wenigstens einen Sonderfarbe kann es sich beispielsweise um eine Metallicfarbe handeln.

Als Bedruckstoffe in dem erfindungsgemäßen Verfahren können prinzipiell alle dem Fachmann zur Verarbeitung in Druckmaschinen bekannten Bedruckstoffe eingesetzt werden. Diese können bogenförmig oder bahnförmig vorliegen. Die Bedruckstoffe sind bevorzugt ausgewählt unter Papier, Karton und Folie.

In einer bevorzugten Ausführungsform hebt man die digitalen Druckdaten des wenigstens einen maschinell auslesbaren optischen Codes vor der Farbtransformation innerhalb der digitalen Druckdaten des Druckbildes durch wenigstens eine digitale Markierung gegenüber den digitalen Druckdaten des restlichen Druckbildes hervor.

In einer weiteren bevorzugten Ausführungsform führt man die Farbtransformation in einem Color-Management-Modul der Druckvorstufe unter Verwendung von ICC-Profilen durch. In einer besonders bevorzugten Ausführungsform berechnet man die Transformationsvorschrift der Farbtransformation vor dem Durchführen der Farbtransformation, legt diese in wenigstens einem vorab berechneten ICC-Profil ab und führt die Farbtransformation unter Verwendung dieses wenigstens einen vorab berechneten ICC-Profils durch. In einer weiteren besonders bevorzugten Ausführungsform berechnet man die Transformationsvorschrift während des Durchführens der Farbtransformation, legt diese in wenigstens einem ICC-Profil ab und führt die Farbtransformation unter Verwendung dieses wenigstens einen während der Farbtransformation berechneten ICC-Profils durch.

Erfindungsgemäß transformiert man bei der Farbtransformation der digitalen Druckdaten des Druckbildes die digitalen Druckdaten des wenigstens einen maschinell auslesbaren optischen Codes nach einem Verfahren, in welchem man die Anzahl der dem wenigstens einen maschinell auslesbaren optischen Code in den digitalen Druckdaten zugeordneten Druckfarben reduziert. In einer bevorzugten Ausführungsform des erfindungsgemäßen Verfahrens reduziert man die Anzahl der Druckfarben auf nur eine Farbe.

In einer bevorzugten Ausführungsform transformiert man die digitalen Druckdaten des wenigstens einen maschinell auslesbaren optischen Codes nach einem Verfahren, in dem man den digitalen Druckdaten des wenigstens einen maschinell auslesbaren optischen Codes wenigstens eine Druckfarbe zuordnet, die eine erhöhte Flächenbelegung aufweist. Als Druckfarbe mit erhöhter Flächenbelegung wird dabei eine solche verstanden, deren Flächenbelegung im Vergleich zu den vorgegebenen Druckfarben ohne erfindungsgemäße Farbtransformation erhöht ist. Durch die Zielvorgabe, für den wenigstens einen maschinell auslesbaren optischen Code möglichst wenige Druckfarben aus dem vorhandenen Farbvorrat der Druckmaschine zu verwenden und gleichzeitig wenigstens eine Farbe mit einer hohen Flächenbelegung zu verwenden, wird eine besonders gute Konturwiedergabe der maschinell auslesbaren optischen Codes und damit eine besonders gute Lesbarkeit erreicht.

In einer weiteren bevorzugten Ausführungsform transformiert man die digitalen Druckdaten des wenigstens einen maschinell auslesbaren optischen Codes nach einem Verfahren, in dem man den digitalen Druckdaten des wenigstens einen maschinell auslesbaren optischen Codes wenigstens eine Druckfarbe zuordnet, die einen erhöhten Kontrast aufweist. Als Druckfarbe mit erhöhtem Kontrast wird dabei eine solche verstanden, deren Kontrast im Vergleich zu den vorgegebenen Druckfarben ohne erfindungsgemäße Farbtransformation erhöht ist.

In einer weiteren bevorzugten Ausführungsform nähert man bei der Farbtransformation der digitalen Druckdaten des Druckbildes den Farbeindruck des wenigstens einen maschinell auslesbaren optischen Codes dem Farbeindruck des restlichen Druckbildes weitestgehend an. Beispielsweise beim Bedrucken einer Verpackung, welche einen Barcode aufweist, kann die Verpackung im restlichen Druckbild große Flächen eines gleichen Farbtons, etwa eines Grüntons, aufweisen. Der Barcode selbst soll dann möglichst im gleichen Grünton gedruckt werden, jedoch erfindungsgemäß mit einer reduzierten Anzahl an Druckfarben. Dann wird bei der Farbtransformation der Druckdaten des Barcodes eine Farbenkombination mit reduzierter Anzahl an Druckfarben ausgewählt, welche bei der Farbmischung dem Farbeindruck der Grüntonflächen im restlichen Druckbild weitestgehend entspricht.

Die nach dem erfindungsgemäßen Verfahren erhaltenen Druckbilder können auf unterschiedliche Bedruckstoffe zur Herstellung unterschiedlicher Druckerzeugnisse gedruckt werden. In einer bevorzugten Ausführungsform ist das Druckbild ausgewählt unter Druckbildern für Warenverpackungen mit einem oder mehreren Barcodes, bevorzugt Warenverpackungen für Lebensmittel, Kosmetika oder andere Verbrauchsgüter.

In einer bevorzugten Ausführungsform kann das erfindungsgemäße Verfahren wie folgt durchgeführt werden. Die digitalen Druckdaten des Druckbildes werden mit einer digitalen Markierung der digitalen Druckdaten des wenigstens einen maschinell auslesbaren optischen Codes an das Color Management Modul (CMM) der Druckvorstufe übergeben. Auf Grundlage dieser digitalen Markierung erfolgt ein spezielles Farbmanagement, bei dem i) eine minimierte Anzahl an Druckfarben für den Farbaufbau des Codes verwendet wird und ii) darauf geachtet wird, dass eine hinreichend kontraststarke Farbe mit einem hohen Flächenanteil als primäre Farbe verwendet wird. Der hohe Flächenanteil kann rasterabhängig als auch Tonwertzunahme-abhängig sein, da im Druck die Fläche weitgehend zu einer Volltonfläche mit geringen Kantenmodulationen werden soll, und iii) die zulässige Farbabweichung bei Bedarf angepasst wird, um das formulierte Ziel gemäß den Punkten i) und ii) besser zu erreichen, da die maschinell auslesbaren optischen Codes freistehend und damit keine großen Flächen sind und damit der direkte Farbabgleich für das menschliche Auge eingeschränkt ist.

In einer weiteren bevorzugten Ausführungsform kann das erfindungsgemäße Verfahren wie folgt durchgeführt werden. Die maschinell auslesbaren optischen Codes oder die Farben für die maschinell auslesbaren optischen Codes werden in der Dokumentenaufbereitung der Druckvorstufe gekennzeichnet und an das Color Management Modul (CMM) mit einem entsprechenden Tag übergeben. Die wiederzugebende Farbe wird im Color Management gezielt auf die Lesbarkeit des maschinell auslesbaren optischen Codes behandelt, wobei eine hinreichend kontraststarke Primärfarbe als Basisfarbe mit einem hinreichend hohen Flächenanteil eingesetzt wird und man die Anzahl der zusätzlich eingesetzten Primärfarben auf ein Minimum reduziert, ohne eine gewisse Qualitätsgrenze im Sinne des Farbabstandes zu unterschreiten. Für ein als maschinell auslesbarer optischer Code gekennzeichnetes Element führt das Color Management Modul eine spezielle Farbtransformation durch, die von der im ICC-Profil definierten Separationsvorschrift abweichen kann. Dazu wird die im ICC-Profil durch das A2Bx angegebene Charakterisierung des Druckprozesses verwendet. Damit wird für den wiederzugebenden Farbeindruck des Elements ein Farbrezept optimiert, wobei neben dem farbmetrischen Abstand zwischen Eingabe und Druck auch Eigenschaften der Separationen berücksichtigt werden, die mit der maschinellen Lesbarkeit des Elements verknüpft sind. Im Gegensatz zur allgemeinen Separationsvorschrift des ICC-Profils dürfen hier starke Änderungen in den Separationen für zwei ähnliche Eingangsfarborte auftreten, da keine Verläufe separiert werden sollen, so dass für jeden Eingangsfarbort unabhängig von der Umgebung die optimale Separation verwendet werden kann. In dem hier beschriebenen Verfahren kann die erwähnte besondere Separation für den Eingangsfarbort eines Elements direkt beim Initialisieren der Farbtransformation des Druckjobs berechnet werden. Die Optimierung der Separation erfolgt also nur für genau den einen im Element verwendeten Eingangsfarbort. Alternativ wird die spezielle Separation in einer vorbereitenden Phase, die direkt beim Erzeugen des ICC-Profils des Ausgabeprozesses stattfinden kann, für den gesamten Eingabefarbraum tabelliert berechnet. Diese Tabelle kann als weitere Transformationsvorschrift mit im erzeugten ICC-Profil abgelegt werden. Die spezielle Separationsvorschrift kann ebenso in einem zweiten ICC-Profil als Separationstag gespeichert werden, wobei dieses zweite Profil nur für die Separation von als maschinell auslesbare optische Codes gekennzeichnete Elemente verwendet werden soll. Bei der Verwendung der tabellierten Transformationsvorschriften für die gekennzeichneten maschinenlesbaren Elemente wird das Color Management Modul in einen speziellen Interpolationsmodus versetzt, bei dem für jeden zu interpolierenden Eingangsfarbort die Separation genau eines Gitterpunktes der Tabelle verwendet wird. Durch diesen Interpolationsmodus wird sichergestellt, dass auch bei den Eingangsfarborten, die nicht mit einem Gitterpunkt der Tabelle zusammenfallen, nicht durch das Kombinieren zweier optimierter Separationen eine Separation mit ungünstigen Eigenschaften entsteht. Mit Hilfe des nicht modifizierten ICC-Profils des Ausgabeprozesses und der für maschinenlesbare Elemente optimierten Separationsvorschrift kann ein Device-Link-Profil berechnet werden. Durch dessen Anwendung wird aus einer gewöhnlichen Separation eine für maschinelle Lesbarkeit optimierte Separation erzeugt. Auch bei Anwendung dieses Device-Link-Profils soll das Color Management Modul bevorzugt einen Interpolationsmodus verwenden, bei dem die Separation an genau einen Gitterpunkt ausgegeben wird. Alternativ kann ein Device-Link-Profil mit hochauflösenden stufenförmigen Eingangs-Look-Up-Tables (LUT) erzeugt werden, so dass jedes CMYK-Tupel aus 8-Bit-Werten nach Anwendung der Eingangs-LUT genau auf einem Gitterpunkt der 4-dimensionalen CLUT landet. Das beschriebene Verfahren kann in einem Workflowsystem um eine Beurteilungseinheit erweitert werden. Diese simuliert die Ausgabe eines maschinenlesbaren Elements und bewertet auf Basis eines Softproofs zum Beispiel anhand der Vorgaben der Norm ISO 15415 die maschinelle Lesbarkeit des Elements. Dies kann noch vor der Ausgabe des Druckjobs geschehen, so dass der Drucker anhand dieser Informationen entscheiden kann, ob noch Anpassungen vor der Ausgabe vorzunehmen sind.

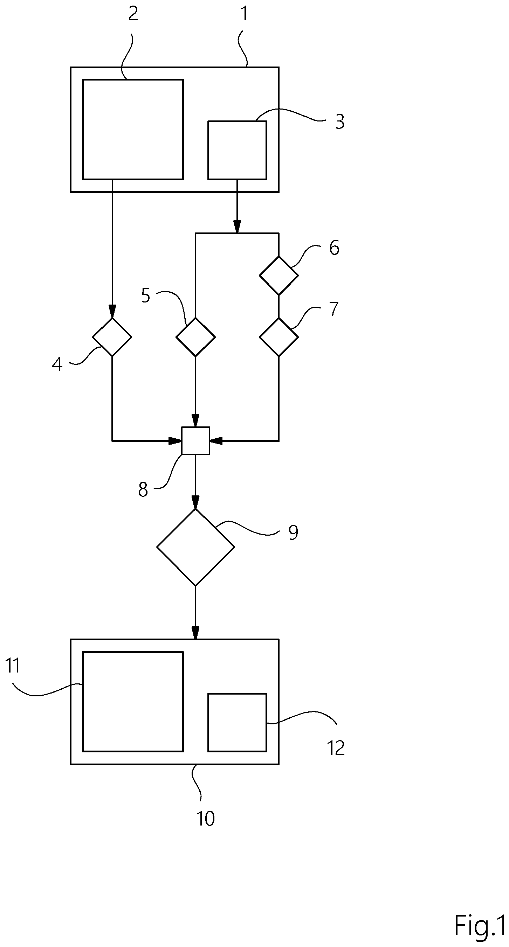

Figur 1 zeigt schematisch den Ablauf einer bevorzugten Ausführungsform des erfindungsgemäßen Verfahrens. Die Druckdaten des gesamten Druckbildes (1) liegen in digitaler Form in der Druckvorstufe vor. Die Druckdaten des gesamten Druckbildes (1) umfassen die digitalen Druckdaten des maschinell auslesbaren optischen Codes (3) und die Druckdaten des restlichen Druckbildes (2), ohne Code. Die Druckdaten des Codes (3) werden in einem Color Management Modul der Druckvorstufe unter Verwendung eines direkt während der Farbtransformation berechneten ICC-Profils farbtransformiert (5), wobei man die Anzahl der verwendeten Druckfarben des Codes reduziert. Alternativ berechnet man in einem Zwischenschritt das ICC-Profil für die Farbtransformation vorab (6) und führt dann mit dem vorab berechneten ICC-Profil die Farbtransformation des Codes durch (7), wobei man die Anzahl der verwendeten Druckfarben des Codes reduziert. Die Druckdaten des restlichen Druckbildes (2) werden einer herkömmlichen Farbtransformation (4) unterzogen. Die nach der Farbtransformation erhaltenen Druckdaten werden in einer Datei (8) gespeichert, welche alle Daten des Druckjobs für die Druckmaschine enthalten. Die Datei (8) wird an die Druckmaschine übermittelt und das gesamte Druckbild (1) umfassend die Druckdaten des Codes (3) und des restlichen Druckbildes (2) gedruckt (9). Im Ergebnis erhält man einen bedruckten Druckbogen (10) mit gedrucktem Code (12) und gedrucktem restlichem Druckbild (11). Durch die spezielle Farbtransformation des Codes (3) ist dieser besonders vorteilhaft optisch auslesbar.

### Bezugszeichenliste

- 1: digitale Druckdaten des Druckbildes
- 2: digitale Druckdaten des restlichen Druckbildes
- 3: digitale Druckdaten des maschinell auslesbaren optischen Codes
- 4: Farbtransformation der digitalen Druckdaten des restlichen Druckbildes mit einem ICC-Profil
- 5: Farbtransformation der digitalen Druckdaten des maschinell auslesbaren optischen Codes mit während der Farbtransformation berechnetem ICC-Profil
- 6: Vorabberechnung des ICC-Profils für die Farbtransformation des maschinell auslesbaren optischen Codes
- 7: Farbtransformation der digitalen Druckdaten des maschinell auslesbaren optischen Codes mit dem vorab berechneten ICC-Profil
- 8: Datei des Druckjobs
- 9: Drucken des Druckjobs mit der Druckmaschine
- 10: Druckbogen
- 11: gedrucktes restliches Druckbild
- 12: gedruckter maschinell auslesbarer optischer Code

## Patentansprüche

1. Verfahren zum Drucken eines Druckbildes, das wenigstens einen maschinell auslesbaren optischen Code umfasst, mit einer Druckmaschine, bei dem man digitale Druckdaten des Druckbildes (1) bereitstellt, wobei die digitalen Druckdaten des Druckbildes (1) die digitalen Druckdaten des wenigstens einen maschinell auslesbaren optischen Codes (3) und die digitalen Druckdaten des restlichen Druckbildes (2) umfassen, die digitalen Druckdaten des Druckbildes (1) einer Farbtransformation unterzieht, welche die Transformation der Farben des Druckbildes in die Druckfarben der Druckmaschine umfasst, wobei man die der Farbtransformation unterzogenen digitalen Druckdaten des Druckbildes (1) an die Druckmaschine übermittelt und mit diesen das Druckbild mit der Druckmaschine druckt,
**dadurch gekennzeichnet,**
**dass** man bei der Farbtransformation der digitalen Druckdaten des Druckbildes (1) die digitalen Druckdaten des wenigstens einen maschinell auslesbaren optischen Codes (3) nach einem anderen Verfahren transformiert als die digitalen Druckdaten des restlichen Druckbildes (2) und in den digitalen Druckdaten des wenigstens einen maschinell auslesbaren optischen Codes (3) die Anzahl der Druckfarben des wenigstens einen maschinell auslesbaren optischen Codes reduziert.

2. Verfahren nach Anspruch 1, wobei der wenigstens eine maschinell auslesbare optische Code ausgewählt ist unter Barcodes und QR-Codes.

3. Verfahren nach einem der vorhergehenden Ansprüche, wobei man die digitalen Druckdaten des wenigstens einen maschinell auslesbaren optischen Codes (3) vor der Farbtransformation innerhalb der digitalen Druckdaten des Druckbildes (1) durch wenigstens eine digitale Markierung gegenüber den digitalen Druckdaten des restlichen Druckbildes (2) hervorhebt.

4. Verfahren nach einem der vorhergehenden Ansprüche, wobei man die Farbtransformation in einem Color-Management-Modul der Druckvorstufe unter Verwendung von ICC-Profilen durchführt.

5. Verfahren nach Anspruch 4, wobei man die Transformationsvorschrift der Farbtransformation vor dem Durchführen der Farbtransformation berechnet, in wenigstens einem ICC-Profil ablegt und die Farbtransformation unter Verwendung dieses wenigstens einen vorab berechneten ICC-Profils durchführt.

6. Verfahren nach Anspruch 4, wobei man die Transformationsvorschrift der Farbtransformation während des Durchführens der Farbtransformation berechnet, in wenigstens einem ICC-Profil ablegt und die Farbtransformation unter Verwendung dieses wenigstens einen während der Farbtransformation berechneten ICC-Profils durchführt.

7. Verfahren nach einem der vorhergehenden Ansprüche, wobei man bei der Farbtransformation der digitalen Druckdaten des Druckbildes (1) die digitalen Druckdaten des wenigstens einen maschinell auslesbaren optischen Codes (3) nach einem Verfahren transformiert, in dem man den digitalen Druckdaten des wenigstens einen maschinell auslesbaren optischen Codes (3) wenigstens eine Druckfarbe zuordnet, die eine erhöhte Flächenbelegung aufweist.

8. Verfahren nach einem der vorhergehenden Ansprüche, wobei man bei der Farbtransformation der digitalen Druckdaten des Druckbildes (1) die digitalen Druckdaten des wenigstens einen maschinell auslesbaren optischen Codes (3) nach einem Verfahren transformiert, in dem man den digitalen Druckdaten des wenigstens einen maschinell auslesbaren optischen Codes (3) wenigstens eine Druckfarbe zuordnet, die einen erhöhten Kontrast aufweist.

9. Verfahren nach einem der vorhergehenden Ansprüche, wobei man bei der Farbtransformation der digitalen Druckdaten des Druckbildes (1) die digitalen Druckdaten des wenigstens einen maschinell auslesbaren optischen Codes (3) nach einem Verfahren transformiert, in dem man den digitalen Druckdaten des wenigstens einen maschinell auslesbaren optischen Codes (3) wenigstens eine Druckfarbe zuordnet, durch die man den Farbeindruck des wenigstens einen maschinell auslesbaren optischen Codes dem Farbeindruck des restlichen Druckbildes weitestgehend annähert.

10. Verfahren nach einem der vorhergehenden Ansprüche, wobei das Druckbild ausgewählt ist unter Druckbildern für Warenverpackungen mit einem oder mehreren Barcodes.
